# EUROPÄISCHE PATENTANMELDUNG

(11) **EP 3 483 303 A1**
(43) Veröffentlichungstag der Anmeldung: **15.05.2019**
(21) Anmeldenummer: 18209981.2
(22) Anmeldetag: 23.09.2015
(51) Int. Cl.: C23C 22/74, C23C 10/26

(54) **SCHLICKER FÜR EIN VERFAHREN ZUR HERSTELLUNG EINER OXIDATIONS- UND KORROSIONSBESTÄNDIGEN DIFFUSIONSSCHICHT**

(30) Priorität: 29.10.2014 DE 102014222024
(62) Teilanmeldung aus: 15186418.8
(71) Anmelder: MTU Aero Engines AG, 80995 München (DE)
(72) Erfinder: Lopez Lavernia, Natividad, 80995 München (DE); Hillen, Michael, 82140 Olching (DE); Pillhöfer, Horst, 85244 Röhrmoos (DE); Kliewe, Anja, 82256 Fürstenfeldbruck (DE)

(57) **Zusammenfassung**

Die vorliegende Erfindung betrifft einen Schlicker für ein Verfahren zu Herstellung einer Diffusionsschicht für den Oxidations - und Korrosionsschutz von temperaturbelasteten Bauteilen, insbesondere von Strömungsmaschinen, wobei das Verfahren die folgenden Schritte aufweist:
Bereitstellung mindestens eines Schlickers,
Auftragen des mindestens einen Schlickers auf einer Bauteilfläche, an der die Diffusionsschicht erstellt werden soll,
Trocknung und/oder Aushärtung des mindestens einen Schlickers mit einer Wärmebehandlung bei einer ersten Temperatur und Diffusionsglühen bei einer zweiten Temperatur, wobei der Schlicker Al - haltiges Pulver und Si - haltiges Pulver und ein Bindemittel sowie ein Cr - haltiges Pulver umfasst, wobei das Cr - haltige Pulver kein sechswertiges Chrom aufweist. Außerdem umfasst die Erfindung einen entsprechenden Schlicker sowie ein Verfahren, bei dem ein Basisschlicker mit mindestens einem Halogenid, einem Cr - haltigen Pulver und einem Bindemittel in mindestens einer ersten Schicht (8) aufgebracht wird und auf der ersten Schicht mindestens eine zweite Schicht (9) mit einem Schlicker aufgebracht wird, der Al - haltiges Pulver und Si - haltiges Pulver und ein Bindemittel umfasst, wobei weder das Cr - haltige Pulver noch das Halogenid sechswertiges Chrom aufweisen.

## Beschreibung

### HINTERGRUND DER ERFINDUNG

### GEBIET DER ERFINDUNG

Die vorliegende Erfindung betrifft einen Schlicker für ein Verfahren zur Herstellung einer oxidations - und korrosionsbeständigen Diffusionsschicht.

### STAND DER TECHNIK

Bei metallischen Bauteilen, die hohen Temperaturen ausgesetzt sind, wie beispielsweise Komponenten von Strömungsmaschinen in Form von stationären Gasturbinen oder Flugtriebwerken, müssen die metallischen Oberflächen vor Oxidations - und/oder Korrosionsangriff geschützt werden. Hierzu ist im Stand der Technik eine Vielzahl unterschiedlicher Schichtsysteme bekannt.

Unter anderem werden auch Diffusionsschichten eingesetzt, bei denen chemische Elemente in die zu schützende metallische Oberfläche eindiffundieren und/oder sich auf der Oberfläche ablagern, um eine Anreicherung des entsprechenden Elements an der zu schützenden Oberfläche zu erzielen. Das eindiffundierte Element stellt dann zusammen mit den Legierungsbestandteilen des Grundwerkstoffs entsprechende Eigenschaften bereit, um das Bauteil bei den gewünschten hohen Temperaturen betreiben zu können.

So ist es beispielsweise bekannt, Aluminium - Diffusionsschichten auf Hochtemperaturwerkstoffen, wie Kobalt - oder Nickelbasislegierungen vorzusehen, wobei die Anreicherung von Aluminium im Oberflächenbereich der entsprechenden Legierungen dazu führt, dass bei einem Hochtemperaturoxidationsangriff eine langsam wachsende Aluminiumoxidschicht ausgebildet wird, die den Werkstoff vor einem weiterem schädigenden Oxidationsangriff schützt.

Unter anderem kann eine entsprechende Aluminium - Diffusionsschicht durch die Aufbringung eines Schlickers erzeugt werden, der Aluminium - haltige Pulverpartikel umfasst, die das Aluminium für den Diffusionsprozess bereitstellen, wobei nach einer Trocknung und/oder Härtung des Schlickers auf der zu behandelnden Oberfläche das Aluminium beim anschließenden Diffusionsglühen aus der getrockneten Schlickerschicht in den Werkstoff eindiffundiert. Die Aufbringung eines derartigen Schlickers durch Streichen, Eintauchen oder Spritzen ist sehr einfach, sodass ein derartiges Verfahren zur Erzeugung einer Aluminium - Diffusionsschicht technisch interessant ist. Insbesondere können durch die einfache Aufbringung auch Bauteile in einfacher Weise repariert werden.

Bekannte Schlicker zur Durchführung eines Aluminium - Diffusionsprozesses weisen neben Aluminium - haltigen Pulverpartikeln ein Bindemittel auf, das im Wesentlichen die flüssige Phase zur Bildung des Schlickers bereitstellt. Allerdings muss ein derartiger Schlicker auch dahingehend ausgebildet sein, dass das Aluminium - haltige Pulver möglichst durch das Bindemittel nicht oxidiert wird, sodass der nachfolgende Diffusionsprozess nicht durch das Vorhandensein von Aluminiumoxid erschwert wird. Entsprechend ist es bekannt zusätzliche chemische Verbindungen, wie beispielsweise Chromate oder Dichromate und Phosphate in den wässrigen und sauren Bindemitteln bereitzustellen. Darüber hinaus kann Siliziumpulver beigemischt werden, um den Diffusionsprozess zu unterstützen.

Insbesondere Chromate sind in der Vergangenheit eingesetzt worden, um zusätzlich neben der Oxidationsbeständigkeit auch die Korrosionsbeständigkeit des entsprechend behandelten metallischen Bauteils zu erhöhen und darüber hinaus auch die Oxidation des metallischen Aluminiums im Schlicker zu inhibieren. Allerdings sind Chrom(VI) - Verbindungen äußerst giftig und gesundheitsschädlich, sodass zunehmend versucht wird, diese Bestandteile in den Schlickerzusammensetzungen zu ersetzen. Beispiele hierfür sind in der WO 2010/134917 A1, WO 2010/134918 A1, WO 2013/149609 A1, WO 2010/022698 A1 oder der DE 198 07 636 C1 beschrieben.

Aus der WO 2014/149141 A1 ist ein Verfahren zur Herstellung eines Schlickers bekannt, welcher für die Beschichtung eines Bereichs einer Superlegierung einer Gasturbinenkomponente angewendet wird.

Aus der WO 94/07004 A1 sind Schlicker für temperaturstabile Aluminium-Silizium-Beschichtungen bekannt.

Aus der WO 95/23243 A1 ist eine platinangereicherte und siliziummodifizierte, korrosionsbeständige Aluminiumschutzschicht bekannt.

Gleichwohl besteht weiterhin ein Bedarf an Schlickern, die fürVerfahren zur Herstellung von oxidations - und korrosionsbeständigen Diffusionsschichten geeignet sind und, die ohne giftige und gesundheitsgefährdende Cr(VI) - Verbindungen auskommen, aber gleichwohl einen ausgewogenen Oxidations - und Korrosionsschutz für metallische Bauteile bei hohen Temperaturen und aggressiven Umgebungsbedingungen bereitstellen.

### OFFENBARUNG DER ERFINDUNG

### AUFGABE DER ERFINDUNG

Es ist deshalb Aufgabe der vorliegenden Erfindung, Schlicker für Verfahren zur Herstellung von Diffusionsschichten für den Oxidations - und Korrosionschutz von metallischen Bauteilen bei hohen Temperaturen und aggressiven Umgebungsbedingungen bereitzustellen, wobei der Schlicker einfach herstellbar und anwendbar sein soll, damit das Verfahren einfach und zuverlässig durchführbar ist, ohne eine Gesundheitsgefährdung für die Anwender darzustellen.

### TECHNISCHE LÖSUNG

Diese Aufgabe wird gelöst durch einen Schlicker mit den Merkmalen des Anspruchs 1. Vorteilhafte Ausgestaltungen sind Gegenstand der abhängigen Ansprüche.

Die Erfindung beinhaltet auch eine Diffusionsschicht auf einem zu schützenden Bauteil, wie einem Bauteil einer Strömungsmaschine vorzusehen, bei der in der Diffusionsschicht deutliche Anteile von Chrom, Aluminium und Silizium vorliegen.

Dies wird nach einem ersten Aspekt der vorliegenden Erfindung dadurch erreicht, dass der erfindungsgemäße Schlicker auf einem entsprechenden Bauteil aufgetragen wird und nach Trocknen und/oder Aushärten des Schlickers dieser einer Diffusionsglühung unterzogen wird, sodass damit die Diffusionsschicht mit entsprechenden Anteilen an Chrom, Aluminium und Silizium entsteht.

Der hierzu verwendete Schlicker umfasst mindestens ein Al - haltiges Pulver, mindestens ein Si - haltiges Pulver sowie mindestens ein Cr - haltiges Pulver und ein Bindemittel, wobei das Cr - haltige Pulver kein sechswertiges Chrom aufweist und von daher toxisch unbedenklich ist.

Das Al - haltige Pulver kann Pulverpartikel aus technisch reinem Aluminium und/oder Aluminiumlegierungen umfassen sowie Al - haltige Pulverpartikel, die mit Silizium beschichtet sind.

Das Si - haltige Pulver kann entsprechend aus technisch reinem Silizium und/oder aus Siliziumlegierungen gebildet sein.

Das Cr - haltige Pulver kann aus technisch reinem Chrom, Chromlegierung und/oder drei - und/oder zweiwertigen Chromverbindungen, insbesondere Chromhalogeniden, wie CrCl₂ oder vorzugsweise CrCl₃ oder deren Hydraten gebildet sein.

Insbesondere können die jeweiligen Pulver mehrere unterschiedliche Pulver der genannten Arten aufweisen, also beispielsweise Al - haltiges Pulver kann Pulverpartikel aus technisch reinem Aluminium und aus einer oder mehreren verschiedenen Aluminiumlegierungen umfassen. Gleiches gilt entsprechend für das Si - haltige Pulver und das Cr - haltige Pulver.

Ein vorteilhafter Schlicker kann 20 bis 40 Gew.% Al - haltiges Pulver, insbesondere Aluminiumpulver, 5 bis 8 Gew.% Si - haltiges Pulver, insbesondere Siliziumpulver und 1 bis 30 Gew.-% Cr - haltiges Pulver, insbesondere 1 bis 20 Gew.% Chrompulver oder 1 bis 25 Gew.% an Chrom(II) - Verbindungen und/oder Chrom(III) - Verbindungensowie als Rest organisches Bindemittel umfassen.

Die Pulverpartikel der verschiedenen eingesetzten Pulver des Schlickers können so gewählt werden, dass ihre durchschnittliche oder maximale Partikelgröße ≤ 100 µm, vorzugsweise ≤ 40 µm beträgt, sodass die Dauer der Diffusionsglühung begrenzt werden kann.

Der Binder kann eine oder mehrere Komponenten aus der Gruppe aufweisen, die organische Stoffe, Wasser, Alkohole, Glykolverbindungen, und Verdickungsmittel umfasst.

Nach einer vorteilhaften Ausführungsform kann der Binder mindestens einen Alkohol oder Glykoletheracetat und mindestens ein Verdickungsmittel umfassen.

Das Verdickungsmittel des Binders kann eine oder mehrere Komponenten der Gruppe aufweisen, die Pektine, Guar, Johannisbrotkernmehl, Carrageen, Celluloseether, Polyvinylalkohol und Silikate umfasst. Insbesondere kann der Binder Glykoletheracetat von 90 Gew.-% bis 100 Gew. % und Verdickungsmittel von 1 Gew.-% bis 2 Gew.-% bezogen auf das Bindemittel aufweisen, sodass das Verdickungsmittel (z.B. Polyvinylalkohol) im Schlicker kleiner oder gleich 5 Gew.% aufweist.

Gemäß einem weiteren Aspekt der vorliegenden Erfindung, für den unabhängig und in Kombination mit anderen Aspekten der Erfindung Schutz begehrt wird, wird ein Verfahren zur Herstellung einer Diffusionsschicht vorgeschlagen, bei welchem eine mindestens zweiteilige Schicht aus mindestens einem Basisschlicker und einem Schlicker zur Herstellung der Diffusionsschicht mit deutlichen Anteilen an Cr, Al und Si eingesetzt wird. Sowohl der Basisschlicker als auch der hierbei eingesetzte Schlicker, der sich von dem vorher beschriebenen Schlicker unterscheiden kann, sind frei von sechswertigem Chrom, um die Toxizität zu begrenzen, aber gleichwohl eine oxidations - und korrosionsbeständige Schutzschicht mit Cr, Al und Si zu schaffen.

Entsprechend kann bei dem Verfahren zunächst mindestens ein Basisschlicker in einer oder mehreren Teilschichten zur Bildung einer ersten Schicht auf dem zu beschichtenden Bauteil aufgebracht werden. Nach dem Aufbringen des Basisschlickers kann der Basisschlicker einer Wärmebehandlung unterzogen werden, um den Basisschlicker zu trocknen. Allerdings kann die Aufbringung mindestens eines Schlickers auf der ersten Schicht aus Basisschlicker auch vor der Durchführung einer Wärmebehandlung zur Trocknung ausgeführt werden, sodass die Wärmebehandlung zur Trocknung gleichzeitig für den Basisschlicker und den Schlicker durchgeführt werden kann. Darüber hinaus ist es noch möglich, eine Glühung zum Reaktionsverbinden des Basisschlickers vor oder nach der Aufbringung des mindestens einen Schlickers in einer oder mehreren Teilschichten zur Bildung einer zweiten Schicht auf der ersten Schicht aus Basisschlicker durchzuführen.

Gleiches gilt für die Diffusionsglühung, die für den Basisschlicker unabhängig von einer Diffusionsglühung für die Schlickerschicht durchgeführt werden kann. Allerdings ist es bevorzugt die Diffusionsglühung für den Basisschlicker und für den Schlicker gleichzeitig in einer Glühung durchzuführen. Bei bestimmten Ausführungsformen kann es jedoch sinnvoll sein für den Basisschlicker bereits vorab mindestens eine Teildiffusionsglühung durchzuführen. Entsprechend kann die zweite Schicht aus einer oder mehreren Teilschichten aus Schlicker vor oder nach Durchführung einer entsprechenden Diffusionsglühung für den Basisschlicker aufgebracht werden.

Das Aufbringen des Schlickers und/oder des Basisschlickers kann genauso wie die Aufbringung des Schlickers bei der Variante ohne darunter liegender Basisschlickerschicht durch Streichen, Pinseln, Eintauchen des entsprechenden Bauteils in den Basisschlicker oder Schlicker oder durch Spritzen des Schlickers oder des Basisschlickers auf die Bauteilfläche aufgetragen werden.

Der Basisschlicker umfasst mindestens ein Halogenid, ein Cr - haltiges Pulver und ein Bindemittel.

Das Halogenid des Basisschlickers kann ein Metallhalogenid, insbesondere eine Metall - Chlorid - Verbindung oder eine Chrom - Halogen - Verbindung, wie CrCl₂ oder vorzugsweise CrCl₃ oder Hydrate davon sein.

Der Basisschlicker kann insbesondere 0,1 bis 10 Gew.% CrCl₂ und/oder CrCl₃ und 25 bis 95 Gew.% Bindemittel sowie als Rest Chrom - und/oder Chromlegierungspartikel aufweisen, wobei das Bindemittel des Basisschlickers auf Acrylbasis oder Glykolbasis oder Polyvinylbasis ausgebildet sein kann. Beispielsweise kann das Bindemittel Acrylsäureester, Methacrylsäureester, eine Methyl - Zellulose - Verbindung, ein Polysaccharid, Polyvinylalkohol, Polyvinylether, ein Polyvinylacetat, ein Polyvinylpyrrolidon oder eine kolloidale Kieselsäure-Mischung aufweisen. Der Basisschlicker kann als eine wässrige oder nicht - wässrige Dispersion bereitgestellt werden.

Der mindestens eine Schlicker, der in der zweiten Schicht auf der Basisschlickerschicht aufgebracht wird, umfasst Al - haltiges Pulver und Si - haltiges Pulver sowie ein Bindemittel, wobei der Schlicker dem Schlicker entsprechen kann, der für die Ausbildung einer erfindungsgemäßen Diffusionsschicht ohne vorherige Aufbringung eines Basisschlickers verwendet wird. Darüber hinaus können die Bestandteile des Schlickers, der für die Aufbringung auf der Basisschlickerschicht vorgesehen ist, bis auf die nicht vorgesehenen Cr - haltigen Pulver entsprechend den Bestandteilen des Schlickers ausgebildet sein, der ohne Basisschlickerschicht aufgebracht wird, insbesondere hinsichtlich des Al - haltigen Pulvers und des Si - haltigen Pulvers sowie des Bindemittels.

Die Wärmebehandlung des Schlickers und/oder des Basisschlickers zur Trocknung bei einer ersten Temperatur kann zwischen 50° C und 600 ° C, vorzugsweise zwischen 100° C bis 300 ° C, insbesondere zwischen 120° C bis 220° C für eine Zeitdauer zwischen fünf Minuten und vier Stunden durchgeführt werden. Bei einer Aufbringung des Basisschlickers und Schlickers in einer oder mehreren Teilschichten kann zwischen der Aufbringung der einzelnen Teilschichten ebenfalls jeweils eine Trocknung erfolgen, die zeitlich genauso lang oder kürzer und/oder bei gleichen oder niedrigeren Temperaturen, beispielsweise bei 80° C bis 150° C durchgeführt werden kann.

Der Basisschlicker kann vor dem Diffusionsglühen einer Glühung zum Reaktionsverbinden unterzogen werden, wobei die Glühung zum Reaktionsverbinden bei einer Temperatur zwischen 900° C und 1160° C für eine Zeitspanne zwischen 1 Stunde und 15 Stunden erfolgen kann. Allerdings kann auch eine mehrstufige Glühung bei zwei oder mehr verschiedenen Temperaturen zur kombinierten Ausführung des Reaktionsverbindens und des Diffusionsglühens durchgeführt werden, insbesondere bei der Variante, bei der der Basisschlicker und der Schlicker einer gemeinsamen Diffusionsglühung unterzogen werden.

Die Diffusionsglühung des Basisschlickers und/oder Schlickers kann bei beiden Varianten, also den Varianten der Aufbringung des Schlickers ohne Basisschlickerschicht und mit Basisschlickerschicht, für eine Zeitspanne zwischen 1 Stunde und 12 Stunden, insbesondere zwischen 1 Stunde und 8 Stunden bei einer Temperatur zwischen 800° C und 1200° C, insbesondere zwischen 825° C und 1000° C, vorzugsweise zwischen 850° C und 950° C durchgeführt werden.

Das Diffusionsglühen des Basisschlickers und/oder des Schlickers kann in einer Inertgasatmosphäre, beispielsweise unter Argon, und/oder im Vakuum durchgeführt werden, wobei unter Vakuum ein technisches Vakuum mit einem Druck ≤ 1 mbar, insbesondere ≤ 0,01 mbar verstanden wird. Darüber hinaus ist es auch möglich die Diffusionsglühung des Basisschlickers und/oder des Schlickers in einer Halogenidatmosphäre oder einer Wasserstoffatmosphäre durchzuführen, wobei insbesondere bei einer Wasserstoffatmosphäre oder eine Inertgasatmosphäre ein gasförmiger Zusatz von Metallhalogeniden oder eines Aerosol mit Metallhalogeniden vorgesehen werden kann. Hierbei können die Metallhalogenide durch CrCl₂ und/oder CrCl₃ gebildet werden.

Die Bauteiloberfläche des zu beschichtenden Bauteils kann zumindest im Beschichtungsbereich vor dem Auftragen des Schlickers oder des Basisschlickers mit Partikeln bestrahlt werden, insbesondere mit Aluminiumoxidpartikel, um Oxide, die auf der Oberfläche vorhanden sind, zu entfernen.

Die vorgestellten Verfahren werden entsprechend so durchgeführt, dass die Diffusionsschicht an der Oberfläche oder gemittelt über der Dicke der Diffusionsschicht 10 bis 30 Gew.-% Chrom, 20 bis 35 Gew.-% Aluminium und 5 bis 20 Gew.-% Silizium aufweist.

Außerdem kann die Diffusionsschicht eine Dicke von 10 bis 200 µm, insbesondere 20 bis 100 µm besitzen.

Das Verfahren eignet sich zur Beschichtung von Nickel - oder Kobaltbasislegierungen, insbesondere Basissuperlegierungen von Bauteilen, insbesondere Schaufeln von Gasturbinen oder Flugtriebwerken, um in einem einfachen, reproduzierbaren und zuverlässigen Prozess ohne Gesundheitsgefährdung der Anwender eine gegen Oxidation und Korrosion beständige Schutzschicht auszubilden, wobei das Verfahren insbesondere bei der Reparatur von entsprechenden Bauteilen eingesetzt werden kann

### KURZBESCHREIBUNG DER FIGUREN

Die beigefügten Zeichnungen zeigen in rein schematischer Weise in
- Fig. 1: eine Darstellung einer Laufschaufel eines Flugtriebwerks, bei der die vorliegende Erfindung eingesetzt werden kann,
- Fig. 2: in den Teilbildern a) und b) teilweise Querschnittansichten durch den Oberflächenbereich eines mit einer Diffusionsschicht zu schützenden Bauteils mit einer aufgebrachten Schlickerschicht (Teilbild a) und der fertiggestellten Diffusionsschicht (Teilbild b), und in
- Fig. 3: eine teilweise Querschnittsansicht durch einen weiteren Oberflächenbereich mit einer aufgebrachten Basisschlickerschicht und einer darüber angeordneten Schlickerschicht.

### AUSFÜHRUNGSBEISPIELE

Die nachfolgend dargestellten Ausführungsbeispiele dienen lediglich der Beschreibung der Erfindung. Allerdings ist die Erfindung nicht auf diese Ausführungsbeispiele beschränkt.

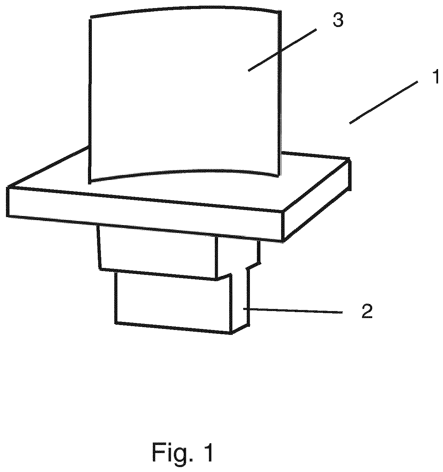

Die Figur 1 zeigt in einer rein schematischen Darstellung eine Ansicht einer Laufschaufel 1 eines Flugtriebwerks mit einem Schaufelfuß 2 und einem Schaufelblatt 3, bei der eine erfindungsgemäße Diffusionsbeschichtung zum Schutz der Laufschaufel 1 vor Oxidations- und Korrosionsangriff aufgebracht werden kann. Hierbei kann die Diffusionsschicht über den gesamten Oberflächenbereich des Bauteils oder nur in bestimmten Bereichen des Bauteils, beispielsweise auf dem Schaufelblatt 3 oder am Schaufelfuß 2 vorgesehen werden.

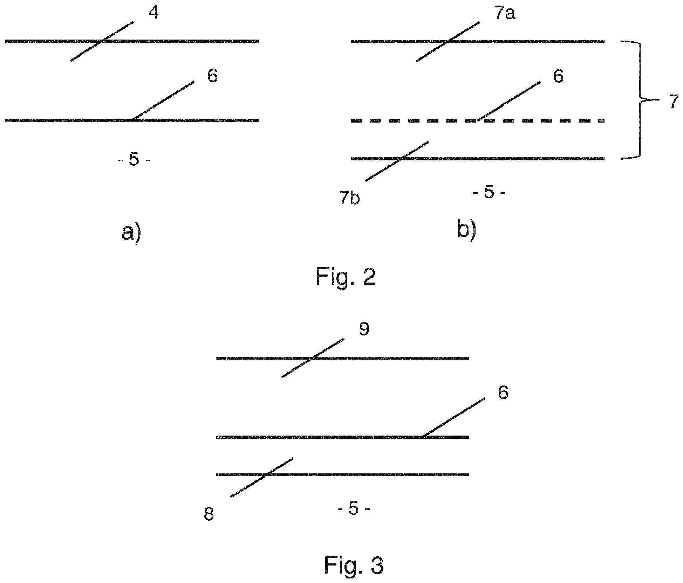

Die Figur 2 zeigt einen teilweise Schnitt durch eine Oberfläche eines zu beschichtenden Bauteils 5, wie beispielsweise der in Figur 1 gezeigten Laufschaufel 1, wobei im Teilbild a) eine aufgebrachte Schlickerschicht 4 zu sehen ist, die auf der Bauteiloberfläche 6 durch Streichen, Pinseln, Spritzen, Eintauchen oder dergleichen aufgebracht worden ist.

Die entsprechende Schlickerschicht 4 wird zunächst bei einer Wärmebehandlung bei einer ersten Temperatur im Temperaturbereich von 120° C bis 220° C für einige Minuten bis zu einigen Stunden, beispielsweise eine halbe Stunde getrocknet, um anschließend einer Diffusionsglühung bei einer zweiten Temperatur im Temperaturbereich zwischen 800° C bis 1000° C in einer Argonatmosphäre oder in einem technischen Vakuum für ein bis acht Stunden unterzogen zu werden, um die Diffusionsschicht herzustellen. Bei einer Vakuumatmosphäre kann der Druck im Bereich von 1 bis 10⁻³ mbar gewählt werden.

Die Figur 2 b) zeigt die Diffusionsschicht 7 mit den Teilschichten 7a und 7b, wobei die Teilschicht 7b durch Eindiffusion des Materials aus dem Schlicker 4 in den Bauteilwerkstoff entstanden ist. Die ursprüngliche Bauteiloberfläche 6 ist in der Darstellung der Figur 2 b) gestrichelt dargestellt. In der äußeren Teilschicht 7a befindet sich neben dem Material der Schlickerschicht 4 auch Material aus dem Bauteilgrundwerkstoff, welches während der Diffusionsglühung nach außen diffundiert ist. Entsprechend hängt die Zusammensetzung der Diffusionsschicht von der Zusammensetzung des Bauteilgrundwerkstoffs ab, wobei jedoch die Diffusionsbeschichtung so durchgeführt wird, dass an der Oberfläche oder gemittelt über der Dicke der Diffusionsschicht 7 der Anteil von Chrom im Bereich von 10 bis 30 Gew.%, der Anteil von Aluminium im Bereich von 20 bis 35 Gew.% und der Anteil von Silizium im Bereich von 5 bis 10 Gew.% liegt. Weitere Bestandteile können durch Elemente, wie Nickel und Kobalt gegeben sein, wenn die Beschichtung beispielsweise auf einem Nickel - oder Kobaltbasiswerkstoff erfolgt ist.

Bei der Schlickerschicht 4 ist ein Schlicker verwendet worden, der 20 bis 40 Gew.% Aluminiumpulver, 5 bis 8 Gew.% Siliziumpulver und 1 bis 20 Gew.-% Chrompulver oder 1 bis 25 Gew.% Chrom(II) - und/oder Chrom(III) - Verbindungen sowie als Rest ein organisches Bindemittel aufweist. Bei den Chrom(II) - und/oder Chrom(III) - Verbindungen kann es sich im Wesentlichen um Chromhalogenide, insbesondere CrCl₂ oder CrCl₃ oder Hydrate davon handeln.

Die Figur 3 zeigt eine alternative Ausführungsform, bei der die gewünschte Zusammensetzung der Diffusionsschicht mit 10 bis 30 Gew.% Chrom, 20 bis 35 Gew.% Aluminium und 5 bis 20 Gew.% Silizium dadurch erreicht wird, dass zunächst zwei unterschiedliche Schichten auf dem zu beschichtenden Bauteil 5 aufgebracht werden, um bei einer abschließenden Diffusionsglühung ebenfalls die gewünschte Diffusionsschicht zu erhalten. Die Figur 3 zeigt in einer teilweisen Schnittansicht auf einer Bauteiloberfläche 6 des zu beschichtenden Bauteils 5 eine aufgebrachte Basisschlickerschicht 8 sowie eine darüber angeordnete Schlickerschicht 9.

Die Basisschlickerschicht 8 kann 0,1 bis 10 Gew.% CrCl₂ und/oder CrCl₃ sowie 25 bis 95 Gew.% Bindemittel und den Rest Chrom - oder Chromlegierungspartikel enthalten.

Nachdem der Basisschlicker bei einer Temperatur im Bereich zwischen 50° C und 600° C, vorzugsweise zwischen 100° C bis 300° C bzw. zwischen 120° C bis 220° C für einige Minuten bis zu einigen Stunden, insbesondere zwischen einer und vier Stunden getrocknet worden ist, wird eine Schlickerschicht 9 aufgebracht, welche ein Al - haltiges Pulver und ein Si - haltiges Pulver sowie ein Bindemittel umfasst. Ein derartiger Schlicker kann beispielsweise 4 bis 50 Gew.% Glykoletheracetat, 0,5 Gew.-% bis 1 Gew.% Verdickungsmittel, 30 Gew.% bis 40 Gew.% Aluminiumpulver sowie 6 bis 7 Gew.% Siliziumpulver umfassen, wobei das Aluminiumpulver ein unbeschichtetes Aluminiumpulver, ein mit Silizium beschichtetes Aluminiumpulver oder ein Gemisch aus unbeschichtetem und mit Silizium beschichteten Aluminiumpulver sein kann.

Die Schlickerschicht des Ausführungsbeispiels der Figur 3 kann ebenfalls wie die Schlickerschicht 4 des Ausführungsbeispiels der Figur 2 in mehreren Teilschichten aufgebracht werden, wobei nach dem Aufspritzen, Eintauchen, Aufpinseln oder Streichen der jeweiligen Schlickerteilschicht eine Zwischentrocknung beispielsweise bei Temperaturen im Bereich von 80° bis 150° C durchgeführt werden kann.

Nach dem Aufbringen der Schlickerschicht 9 wird der Schichtaufbau mit der Basisschlickerschicht 8 und der Schlickerschicht 9 ebenfalls einer Diffusionsglühung unterzogen, wobei die Diffusionsglühung im Temperaturbereich zwischen 800° und 1200° Celsius für eine Zeitdauer zwischen 1 und 8 Stunden im Vakuum oder einer Schutzgasatmosphäre, wie Ar, erfolgen kann.

Obwohl die vorliegende Erfindung bezüglich der Ausführungsbeispiele detailliert beschrieben worden ist, ist die Erfindung nicht auf diese Ausführungsbeispiele beschränkt, sondern kann Abwandlungen, wie beispielsweise das Weglassen einzelner Merkmale oder die Kombination unterschiedlicher Merkmale umfassen, solange der Schutzbereich der beigefügten Ansprüche nicht verlassen wird. Die vorliegende Offenbarung umfasst alle Kombinationen sämtlicher, vorgestellter Einzelmerkmale.

### BEZUGSZEICHENLISTE

- 1: Laufschaufel
- 2: Schaufelfuß
- 3: Schaufelblatt
- 4: Schlickerschicht
- 5: Bauteil
- 6: Bauteiloberfläche
- 7: Diffusionsschicht
- 7a: äußere Diffusionsschicht
- 7b: innere Diffusionsschicht
- 8: Basisschlickerschicht
- 9: Schlickerschicht

## Patentansprüche

1. Schlicker zu Herstellung einer Diffusionsschicht für den Oxidations - und Korrosionsschutz von temperaturbelasteten Bauteilen, insbesondere von Strömungsmaschinen, welcher Al - haltiges Pulver und Si - haltiges Pulver und ein Bindemittel umfasst,
**dadurch gekennzeichnet, dass**
der Schlicker weiterhin ein Cr - haltiges Pulver umfasst, wobei das Cr - haltige Pulver kein sechswertiges Chrom aufweist.

2. Schlicker nach Anspruch 1,
**dadurch gekennzeichnet, dass**
das Al - haltige Pulver Pulverpartikel umfasst, die mit Si beschichtet sind, und/oder dass das Al - haltige Pulver technisch reines Aluminium und/oder Al - Legierungen umfasst und/oder dass das Si - haltige Pulver technisch reines Silizium und/oder Si - Legierungen umfasst und/oder dass das Cr - haltige Pulver technisch reines Chrom und/oder Cr(II) - Verbindungen und/oder Cr(III) - Verbindungen, insbesondere Cr(II) - Halogenide und/oder Cr(III) - Halogenide umfasst.

3. Schlicker nach einem der vorhergehenden Ansprüche,
**dadurch gekennzeichnet, dass**
der Schlicker 20 bis 40 Gew.% Al - Pulver und 5 bis 8 Gew.% Si - Pulver und 1 bis 20 Gew.% Cr - Pulver oder 1 bis 25 Gew.% Cr(II) - Verbindungen und/oder Cr(III) - Verbindungen sowie als Rest organische Bindemittel umfasst.

4. Schlicker nach einem der vorhergehenden Ansprüche,
**dadurch gekennzeichnet, dass**
die Pulverpartikel eine durchschnittliche oder maximale Partikelgröße von kleiner oder gleich 100 µm, vorzugsweise kleiner oder gleich 40 µm aufweisen.

5. Schlicker nach einem der vorhergehenden Ansprüche,
**dadurch gekennzeichnet, dass**
der Binder mindestens eine Komponente aus der Gruppe aufweist, die organische Stoffe, Wasser, Alkohole, Polyvinylalkohol. Glykolverbindungen, und Verdickungsmittel umfasst, wobei der Binder vorzugsweise Wasser, mindestens eine Glykolverbindung und mindestens ein Verdickungsmittel umfasst, und wobei insbesondere das Verdickungsmittel ausgewählt ist aus der Gruppe, die Pektine, Guar, Johannisbrotkernmehl, Carrageen, Celluloseether, Polyvinylalkohol und Silikate umfasst.

6. Verfahren zu Herstellung einer Diffusionsschicht für den Oxidations - und Korrosionsschutz von temperaturbelasteten Bauteilen, insbesondere von Strömungsmaschinen, welches die folgenden Schritte aufweist:
Bereitstellung mindestens eines Schlickers,
Auftragen des mindestens einen Schlickers auf einer Bauteilfläche, an der die Diffusionsschicht erstellt werden soll,
Trocknung und/oder Aushärtung des mindestens einen Schlickers mit einer Wärmebehandlung bei einer ersten Temperatur und Diffusionsglühen bei einer zweiten Temperatur,
**dadurch gekennzeichnet, dass**
ein Schlicker nach einem der vorhergehenden Ansprüche verwendet wird.

7. Verfahren nach Anspruch 1,
**dadurch gekennzeichnet, dass**
der Schlicker der zweiten Schicht (9) auf den Basisschlicker der ersten Schicht (8) vor oder nach einer Wärmebehandlung des Basisschlickers oder vor oder nach einer Glühung zum Reaktionsverbinden des Basisschlickers oder vor oder nach einer Diffusionsglühung des Basisschlickers aufgebracht wird.

8. Verfahren nach einem der Ansprüche 1 oder 2,
**dadurch gekennzeichnet, dass**
das Halogenid des Basisschlickers eine Metall - Chlorid - Verbindung oder Chrom - Halogen - Verbindung, insbesondere CrCl₂ oder CrCl₃ umfasst.

9. Verfahren nach einem der Ansprüche 1 bis 3,
**dadurch gekennzeichnet, dass**
der Basisschlicker 0,1 bis 10 Gew.% CrCl₂ und/oder CrCl₃ und 25 bis 95 Gew.% Bindemittel und als Rest Cr - und/oder Chromlegierungspartikel umfassen, wobei das Bindemittel auf Acrylbasis oder Glycolbasis oder Polyvinylbasis ist.

10. Verfahren nach einem der vorhergehenden Ansprüche,
**dadurch gekennzeichnet, dass**
die Wärmebehandlung des Schlickers oder Basisschlickers bei einer Temperatur zwischen 50°C und 600°C, vorzugsweise 100°C bis 300°C, insbesondere 120°C bis 220°C und/oder für eine Zeitspanne zwischen 5 min und 240 min erfolgt.

11. Verfahren nach einem der vorhergehenden Ansprüche,
**dadurch gekennzeichnet, dass**
die Glühung des Basisschlickers zum Reaktionsverbinden vor dem Diffusionsglühen und/oder bei einer Temperatur zwischen 900°C und 1160°C und/oder für eine Zeitspanne zwischen 15 min und 15 h erfolgt.

12. Verfahren nach einem der vorhergehenden Ansprüche,
**dadurch gekennzeichnet, dass**
das Diffusionsglühen des Basisschlickers und/oder Schlickers für eine Zeitspanne zwischen 30 min und 12 h, insbesondere zwischen 1 und 8 h und/oder bei einer Temperatur zwischen 800°C und 1200°C, insbesondere zwischen 825°C und 1000°C, vorzugsweise zwischen 850°C und 950°C erfolgt.

13. Verfahren nach einem der vorhergehenden Ansprüche,
**dadurch gekennzeichnet, dass**
das Diffusionsglühen des Basisschlickers und/oder des Schlickers in einer Halogenidatmosphäre, einer Wasserstoffatmosphäre oder einer Inertgasatmosphäre und/oder bei einem Druck zwischen Umgebungsdruck und technischem Vakuum, insbesondere bei einem Druck kleiner oder gleich 1 mbar, insbesondere kleiner oder gleich 0,01 mbar erfolgt, wobei insbesondere die Wasserstoffatmosphäre oder die Inertgasatmosphäre einen gasförmigen Zusatz von Metallhalogeniden oder ein Aerosol mit Metallhalogeniden aufweisen, wobei die Metallhalogenide insbesondere CrCl₂ und/oder CrCl₃ umfassen.

14. Verfahren nach einem der vorhergehenden Ansprüche,
**dadurch gekennzeichnet, dass**
der Schlicker der zweiten Schicht, der auf dem Basisschlicker aufgebracht wird, ist und/oder
vor dem Auftragen des Schlickers oder des Basisschlickers die zu behandelnde Oberfläche mit Partikeln, insbesondere Aluminiumoxid - Partikeln gestrahlt wird.

15. Verfahren nach einem der vorhergehenden Ansprüche,
**dadurch gekennzeichnet, dass**
das Verfahren so durchgeführt wird, dass die Diffusionsschicht an der Oberfläche oder gemittelt über der Dicke der Diffusionsschicht 10 bis 30 Gew.% Cr , 20 bis 35 Gew.% Al und 5 bis 20 Gew.% Si aufweist und/oder
das Verfahren so durchgeführt wird, dass die Diffusionsschicht eine Dicke von 10 bis 200 µm, insbesondere 20 bis 100 µm aufweist.
